# EUROPEAN PATENT SPECIFICATION

(11) **EP 3 313 693 B1**
(45) Date of publication and mention of the grant of the patent: **06.05.2020**
(21) Application number: 16817308.6
(22) Date of filing: 22.06.2016
(51) Int. Cl.: B60P 3/00, B61D 1/00, E04H 4/00, A47K 3/00, A61H 33/00

(54) **MOBILE VEHICLE WITH WATER BATHING FACILITY FOR ENTERTAINMENT PURPOSES, VEHICLE-MOUNTED WATER-LEVEL CONTROLLING SYSTEM FOR BATHING-POOL FILLED WITH WATER**
MOBILES FAHRZEUG MIT WASSERBADEANLAGE FÜR UNTERHALTUNGSZWECKE, FAHRZEUGMONTIERTES WASSERSTANDSTEUERUNGSSYSTEM FÜR MIT WASSER BEFÜLLTES BADEBECKEN
VÉHICULE MOBILE DOTÉ D'UN ÉQUIPEMENT DE BAIGNADE À DES FINS DE DIVERTISSEMENT, SYSTÈME DE COMMANDE DE NIVEAU D'EAU MONTÉ SUR VÉHICULE POUR UN BASSIN DE BAIGNADE REMPLI D'EAU

(30) Priority: 29.06.2015 HU 1500300
(43) Date of publication of application: 02.05.2018
(73) Proprietor: Gál, Béla, 1073 Budapest (HU)
(72) Inventor: Gál, Béla, 1073 Budapest (HU)
(86) International application number: PCT/HU2016/000039
(87) International publication number: WO 2017/001873

(56) References cited:
- KR-A- 20100 039 700
- RU-U1- 22 111
- US-A- 3 648 300
- US-A- 3 905 308
- US-A- 3 905 308
- US-A- 5 201 562
- US-A- 5 967 583
- US-A1- 2011 204 676
- US-A1- 2015 157 158
- US-A1- 2015 157 158

## Description

### Field of the invention

The invention relates to a motor road traffic vehicle with bathing pool mounted on the vehicle, filled with water, equipped with a water-level controlling system controlling to a constant level the water of this pool in the moving vehicle for pool-entertainment of bathing people transported in the pool filled with water on the vehicle moving in traffic, for example using it as sightseeing bus.

### Description of prior art

Document of disclosure No EP 1671686 A1 - relates to a watercraft for entertainment purposes inside a closed building flooded with water with the said watercraft moving along a fixed track. The people are seated in the said watercraft. The watercraft floats on the water, fixed with articulated brackets and steel cables. The solution given in this document bears only as much resemblance to the present invention that it uses similar articulated brackets and cylinders in order to move the watercraft in the course of its glissade along the cableway.

Document No CN203736837U **U** 20140730**-** deals with a rack moving in three dimensions to be used in a movie theatre in order to allow the spectators to experience what is happening in the film in form of movements in addition to the visual experience. The solution given in this document is similar to present claim insofar it uses cylinders and moves in three dimensions.

Document No US005967583A**-** relates to a bus, which, as it can be seen from the title, is actually a camper van. All the resemblance it shows with the present claim is that it has a pool mounted on it. The said pool is static, i.e. it is fixed on top of the van above the driver's cabin. According to the description, the pool is filled up only when the vehicle is stationary. The pool cannot contain water when the vehicle is moving, the description does not refer to any technical solution as to holding the water within the pool. The document does not refer to the way of filling the pool with water, of draining the water off, nor does it have any water cleaning equipment. According to the description the motor vehicle was designed to be used on motorways, which also corroborates the presumption that the pool was not designed to be filled with water while the car is on the move, but only when the vehicle is stationary, for example in a campsite.

There is an article published on the 9^{th} of July, 2014 on the website *www.dailymail.co.uk*/*news*/*article-269830*/*Hot-tub-wheels-The-Cadillac-thats-converted-mobile-pool.html*. The article demonstrates a Cadillac automobile with a built-in pool. The pool is fit up with water circulating pump and water nozzles. These accessories are installed in the car boot. The pool does not contain seats, which means that it probably was not designed to be used in traffic. The pool is statically fixed, the water-level control is not ensured, which is well shown in the attached video footage where a slow braking at about 10 km/h causes a significant swaying of the mass of water. Moreover, as the vehicle lacks seats, the people in the pool are exposed to significant inertia even in the case of such slight braking. This can be well perceived by observing the displacement of the driver. The driver is pushed intensely forward, although he can brace himself against the steering wheel. The vehicle described in the article is unsuitable for road traffic with a pool filled with water.

Document No WO2008145407A1**-** relates to a sightseeing bus with seats arranged in such a manner that every passenger has a perfect view frontwards. For this purpose the seats are arranged so that each row is higher than the one in front of it so that the passengers get a perfect forward view unobstructed by the passengers sitting in front of them.

Document No EP2008019446**-** relates to an air suspension system for vehicles dealing with a level control device, which is an air suspension operating by means of compressed air for the purpose of the level controlling of motor vehicles and trailers.

Document No EP 20060007972**-** relates to a switching valve designed for use in appliances for raising and lowering vehicle bodies. The appliances used for this purpose are primarily air suspension systems. Such air suspension systems are suitable for raising and lowering vehicle bodies. The claim relates to a more convenient and safer way of operating the switching valve.

Document No US2012139299**-** relates to a sliding roof designed for sightseeing buses and other vehicles. The said roof has a pivot system and its purpose is to ensure clear view for the tourists in the bus, which is most useful in narrow streets and among tall buildings.

Document No CN201343014**-** relates to a sightseeing bus equipped with tables and chairs with room enough to move around among them. Family members or smaller parties can sit around the tables. The claim also relates to the satisfactory solution of the heating and the sound technique for listening to music for entertainment.

Document No CN2586615**-** relates to a vehicle converted to be suitable for catering which can be used as sightseeing bus as well, but set up on location, it can also be used as a diner in fairs or for workers in plants. The invention also puts emphasis on the importance of environmental protection and the proper waste utilization.

Document No KR20100039700A relates to a motor vehicle equipped with bathing tub similar to the size commonly used in the households. This bathing tube is used in motor vehicle's stationary mode for bathing people in need. The bathing tube is transported on the roads to the people in need without people. The one-person bathing tub can only be moved up and down by a hydraulically operated lifting gear, people with disabilities are immersed in the bathing tube with a canvas, the bathing tube equipped with a central control unit and with water level controlling for the bathing but these all are only in motor vehicle's stationary mode.

We could find a few solutions for motor vehicle for road traffic equipped with bathing pool mounted on the vehicle in the prior art. These vehicles are unsuitable for road traffic with a pool filled with water, as the water level is not controlled or can be controlled only in motor vehicle's stationary mode by a water level controlling system.

But we could not find in the available prior art any solution for a motor road traffic vehicle with bathing pool mounted on the vehicle, filled with water, equipped with water-level controlling system controlling to a constant level the water of this pool in the moving vehicle for pool-entertainment of bathing people transported in the pool filled with water in the traffic moving vehicle.

### Presentation of the problem to be solved by the present invention

The aim of the invention is to construct a motor vehicle moving at moderate speed, which vehicle is equipped with pool, especially a sightseeing bus, and the controlling of the water level in overall road and traffic conditions in the pool filled with water, and transportation of people in the pool filled with water for the purpose of entertainment, sightseeing or other social occasions.

The problem is the controlling of the pool mounted on a motor vehicle and keeping the level of the water in the pool at a constant level in the vehicle moving in road traffic. Any solution of this is not known from the prior art.

It is known that in case of an open m pool that is mounted on a vehicle and which pool is filled with water, most of the water spills out of the m pool while the vehicle is moving downhill or uphill or during braking, accelerating or cornering, on account of the centrifugal force. Consequently the primary task is to devise a 6 water level control system that ensures that the water is contained in the m pool despite the acting forces, and the water level is kept steady. According to our calculations, if one takes a m pool about 1 metre deep and the edge of the wall of the said pool is not more than 200 millimetres above the water level at rest, an instance of braking of 0.5 g strength causes 40-50% of the water in the m pool to spill out from the pool, but even in standard traffic conditions involving 0.2g-0.3g deceleration or acceleration, a significant amount of water is spilled out. The coordinated operation of the system comprising the three main units of the invention is capable of containing the water in the m pool despite the above mentioned forces.

The coordinated operation of the system comprising the three main units of the invention is capable of containing the water in the pool despite the above mentioned forces, if the pool is continuously controlled by moving it in three dimensions relating to the chassis during the moving of the vehicle. Consequently, by keeping the mass of water at a constant level in the pool during the moving of the vehicle it is possible to transport bathing people in the pool in the vehicle moving in traffic while the experience of the pool-entertainment of bathing people is increased by the moving of the pool in three dimensions. The problem of maintaining a constant water level for this purpose has been solved by the new pool moving unit.

### Solution of the problem

The invention is defined by a motor road traffic vehicle with the features of claim 1. Preferred embodiments of the invention are defined in the dependent claims. The object of the invention is a mobile vehicle for entertainment with bathing pool comprising a motor vehicle suitable for vehicular traffic equipped with a pool and devices ensuring the constant water level of the pool. The motor vehicle described by the invention is characterised by the fact that the pool is mounted on the stage by means of a pool moving unit joining the stage to the chassis which allows the pool to be moved, the pool is equipped with a water level controlling system comprising a flood diverting unit, a water flow and sway controlling unit as well as water temperature controlling equipment and a central control unit, and the motor vehicle is also equipped with amenities for comfort and sanitation purposes.

The mobile vehicle for entertainment with bathing pool the moving unit of the pool comprises at least one transversal elevating unit, at least one longitudinal elevating unit, at least one set of articulated suspension and attaching pieces, bearings, bearing housing, a longitudinal axis and a transversal axis and a stage where at least one transversal elevating unit is connected to the stage and to the chassis of the motor vehicle and at least one longitudinal elevating unit is connected to the bearing housing and to the chassis allowing the stage to move in three dimensions. At least one transversal elevating unit and at least one longitudinal elevating unit of the pool moving unit comprises screw jacks or, hydraulic or pneumatic cylinders.

The flood diverting unit of a favourable design of the mobile vehicle for entertainment with bathing pool is made up of a curved wall of the pool, at least one floodspace, swinging gates of the same number as the floodspaces, grilled protective casings, water deflecting lamellae and return channels of flood space, where the curved wall of the pool has a shape of curving back in a semicircle joined to floodspaces and separated from them by water deflecting lamellae that are designed to automatically open in the direction of the floodspaces, the return channels of flood spaces on the right and left sides of the pool are covered with grilled protective casing.

The water flow and swing controlling unit of a favourable design of the mobile vehicle for entertainment with bathing pool is made up of water outlet channels, water inlet channels, high pressure pumps, flexible ducts, valves and surge tanks, the water outlet channels are positioned along the bottom one-third of the front, rear or side walls of the pool, the water outlet channels and water inlet channels are covered with grilled protective casings, the water inlet channels are lodged at the bottom of the pool, the water outlet channels are connected to the surge tanks via flexible ducts and valves, the water inlet channels are connected to the surge tanks through high pressure pumps and flexible ducts.

The central control unit of a favourable design of the mobile vehicle for entertainment with bathing pool comprises at least one sensor of water level, one sensor of water temperature, one sensor of air temperature, at least one signaller to monitor the acceleration, the deceleration and tilt of the vehicle, a gyroscope, at least one computer, computer programs, relays and electrical wires where the sensors and the signallers are connected to the in-ports of the computer, the high pressure pumps, the valves, the cylinders, the transversal and longitudinal elevating units, the water-heating and water-cooling units are controlled by the computer.

Water-level controlling system in the case of a practical realisation of the mobile vehicle for entertainment with bathing pool described by the invention the pool moving unit, the flood diverting unit and the water flow and swing controlling unit forming the water-level controlling unit of the pool are controlled by the central control unit in hierarchical order depending on the strength of the water surge where the water surge fills the flood diverting unit, at the same time the pool is tilted by the pool moving unit and then the remaining water surge is diverted by means of the water flow and sway controlling unit.

The practical realisation of the mobile motor vehicle for entertainment with bathing pool described by the invention is equipped with heating-cooling installation regulating the water temperature of the pool, as well as additional equipment enhancing comfort and assuring proper hygiene:
- air and water nozzles providing back and lower-back massage,
- removable seats in the (m) pool,
- changing room, a lavatory, shower room and locker on board the motor vehicle,
- steps and passageways equipped with slip-free material,
- the seats are equipped with seatbelts.

Any a favourable design of the mobile motor vehicle for entertainment with bathing pool described by the invention is equipped with a pool made of either transparent or non-transparent material, its top may have open, covered or partly covered roof or a sliding sunroof.

During the operation of the mobile motor vehicle for entertainment with bathing pool where the signals of the sensors and signallers are entered into the central control unit during the operation of the pool moving unit, which unit controls the transversal elevating unit and the longitudinal elevating unit which, in turn, move the stage by the longitudinal and transversal axis, tilting the pool fixed onto the stage in three dimensions so eliminating the water swaying caused by the road- and traffic conditions while the motor vehicle is moving, the water surge caused by the movement of the vehicle being channelled into the floodspace through the

swinging gates by operating the flood diverting unit, forcing the water to change direction by means of the water deflecting lamellae, furthermore, the valves are opened during the operation of the water flow and swing controlling unit to a controlled diameter and for a controlled period activated by the signal of the central control unit, in this way channelling the water from the pool into the surge tanks through the water outlet channels in instances of water surges caused by road and traffic conditions, while the water is immediately pumped back into the pool by the high pressure pumps from the surge tanks via the water inlet channels.

The transportation of people in the pool filled with water while operating at least one appliance doing high-pressure water-jet foot and back massage, and operating at least one Jacuzzi using high pressure air injecting system, the water of the pool is heated or cooled to the required temperature and the people in the pool are entertained and / or take part in a sightseeing tour, the motor vehicle is equipped with seats, food and drinks storing units, changing room, lavatory, shower room, locker, furthermore a water-level controlling system is applied to ensure a constant water-level while the mobile motor vehicle is in motion.

The practical realisation of the mobile motor vehicle for entertainment with bathing pool defined by the invention is described in detail by the attached diagrams:
Figure No. 1 is the side view of the mobile motor vehicle for entertainment with bathing pool described by the invention - preferably a bus,
Figure No. 2 is the side view of the pool with the attached units as part of the motor vehicle in figure No. 1.
Figure No. 3a-3c are the flood diverting unit together with the water flow and swing controlling unit viewed from above, their front view and lateral view,
Figure No. 3d is the perspective representation of the swinging gate of the flood diverting unit shown in figures No. 3a-3c,

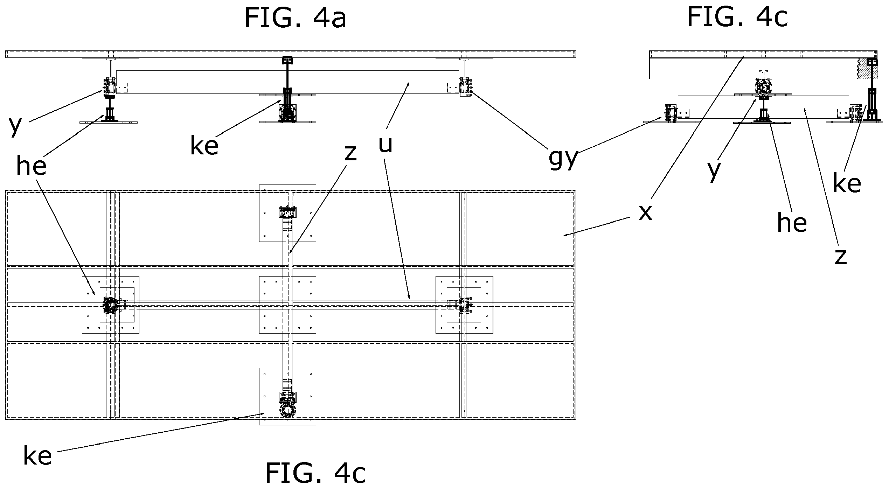

Figure No. 4a-4c show the pool unit of the motor vehicle in figure No. 1. viewed from above, its front view and lateral view.

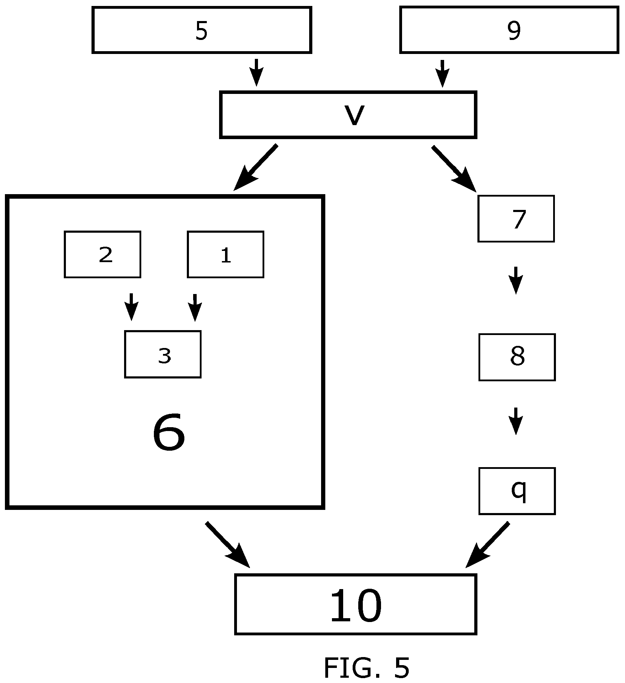

Figure No. 5 is the conceptual flowchart of the water level control of the motor vehicle shown in figure No. 1.

### Description of the embodiment of the invention.

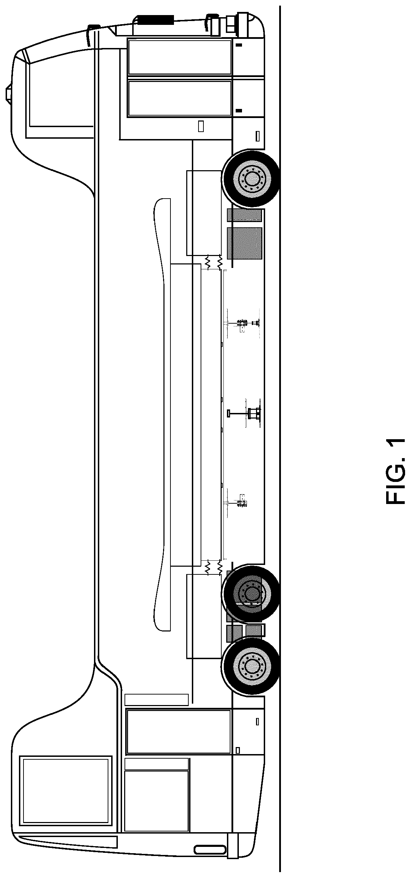

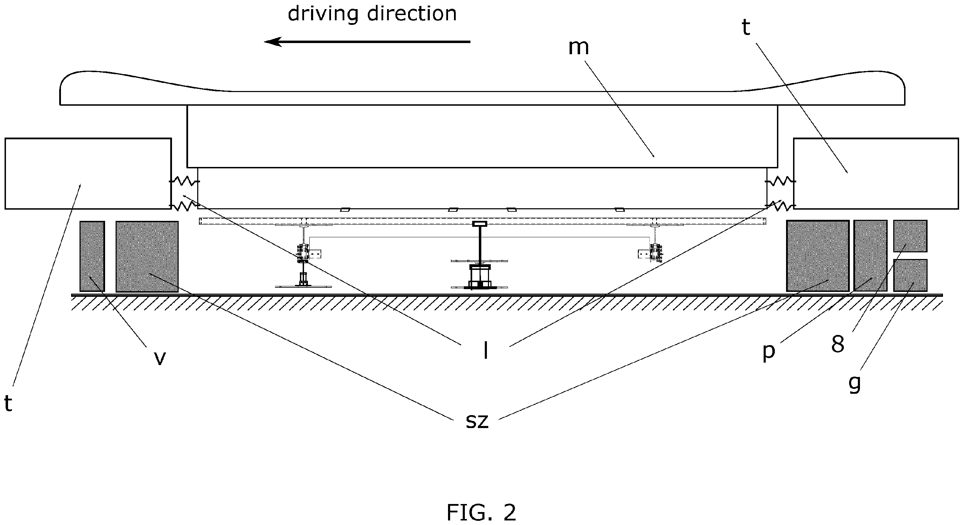

Figure No 1 shows the sketch of a practical implementation of the invention. The practical form of the motor vehicle is a bus with half-covered design, the side walls are of standard factory design with large, contiguous glass panes, but the bus can have open sides up from the top of the pool. The roof can be fitted with a sunroof - not shown here - which can be slid from the open section of the roof. The sunroof slides by means of a special, custom-designed guide rail system. The 11 chassis of the motor vehicle is fitted with two elevating units, one longitudinal elevating unit and one transversal elevating unit with articulated parts holding the frontal and lateral parts of the pool. The said elevating units are preferably hydraulic cylinders, however, the required function can be achieved by other structures that ensure lateral an longitudinal elevating movement. The elevating units tilt the x stage relative to the 11 chassis, the stage being fit onto the longitudinal and cross axes through the gy bearings. The x stage bears the m pool, certain units of the 6 water-level controlling system and other additional equipment. Two units of the t surge tanks are fixed to the chassis, they do not move together with the m pool, the connection between the t surge tanks and the m pool is ensured by flexible ducts (see figure No.2). The 12 changing rooms are installed in the front and rear parts of the upper deck of the vehicle, from where one gets a view of the m pool though a glass wall. The passengers can get on the motor vehicle through the 13 front and rear doors.

Figure No. 2 shows the lateral view of the m pool of the motor vehicle described by the invention with attached units, namely a 2 flood diverting unit, a 3 water flow and swing controlling unit and a 1 pool moving unit as well as other accessory units, that is t surge tanks, a central control unit, high pressure pumps p compressor, a water filtering system and a g circulation pump.

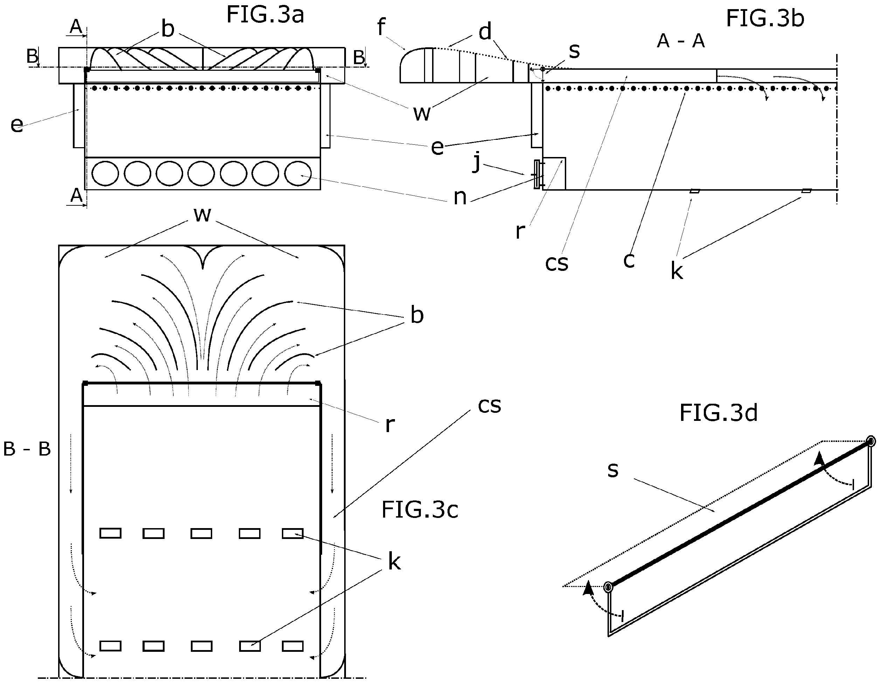

The 1 pool moving unit is a unit whose function is to control the water level of the m pool when the motor vehicle is on the move by means of he longitudinal elevating unit and ke transversal elevating unit, hydraulic, pneumatic cylinders or screw jacks as well as brackets and joints connecting the said parts, fitted between the m pool and the 11 chassis. The he longitudinal elevating unit and ke transversal elevating unit of the pool moving unit consist of one or several h cylinders arranged either in the middle or at the corners of the m pool, raising or lowering the m pool filled with water according to the current situation activated by the signals of the central control unit, allowing the water level to be kept at a controlled level. If needed, by the action of the appropriate elevating unit one side of the m pool raises relative to the 11 chassis of the motor vehicle allowing the correct adjustment of the water level. This controlling is necessary on the one hand when the road conditions change, namely the vehicle is moving uphill or downhill. In these conditions the water flows forwards or backwards, and it is liable to spill over the wall of the m pool. If needed, by the action of the appropriate elevating unit one side of the m pool raises relative to the 11 chassis of the motor vehicle allowing the correct adjustment of the water level. On the other hand, there is need for the water level control when the traffic conditions make it necessary, namely when braking, accelerating or changing direction. Gravitation always forces the fluid to fill in the m pool with its surface being horizontal, even when the m pool is tilted. The gravity acceleration is 1 g, that is about 10 m/s², this is the force that keeps the fluid in the m pool and keeps us on the ground. If a hypothetical pool is forced onto a circular track, the water will be kept in the pool by the centrifugal force, as it were, pressed against the bottom of the pool. The 1 pool moving unit utilises this law of physics, that is, operating the respective elevating units at the right moment so that the surge of water is, so to say, countered. This phenomenon served as the basic idea for creating the 1 pool moving unit. In practical tests we suspended a pool filled with fluid on a mobile car structure, and exposed it to acceleration and deceleration of different values. As a matter of course, a m pool with people in it can only be tilted within limits. This is the reason why present invention comprises additional units as well. One such unit is the 2 flood diverting unit (see Figures No. 3a-3c).

The front and rear f walls of the m pool have a special design. This special design means a raised part of the wall which is semicircular in cross section, aimed to change the direction of the water surge and return the water into the m pool along a circular path. This shape allows the flowing water to return to the inside area of the m pool, reversing the direction of the flow. This shape makes it possible for the water gushed out on account of the water's inertia caused by the acceleration and deceleration of the moving vehicle to be channelled back into the m pool. The front f wall is equipped with an automatically opening one-way swinging gate (see Figure No. 3d) placed above the water level measured at standstill, while the vehicle is stationary, and whose purpose is to ensure that in case of a surge, typically while braking, the water can flow only in one direction, exclusively towards the w floodspace and prevent backflow, thus forcing the water to flow through the b water deflecting lamellae and change direction. The water is diverted into lateral direction and forced to change direction by means of the specially curved b water deflecting lamellae behind the s swinging gate, installed in the w floodspace. From here the water flows back into the m pool via the cs return channels of flood space lodged along the right and left side of the m pool. For safety reasons, the w floodspace equipped with b water deflecting lamellae is covered with d grilled protective casing. The said d grilled protective casing may be made of metal or plastic.

The other additional unit is the 3 water flow and swing controlling unit, whose function is regulating the water level. The 3 water flow and swing controlling unit comprises k water inlet channels set below the water level of the m pool and n water outlet channels. A sz high performance pump is used to quickly move the water of the m pool swaying due to inertia caused by the movement of the vehicle, to the spaces short of water. The sz high performance pump is operated according to the 3 water flow and sway controlling unit as shown in fig. 2. This 3 water flow and sway controlling unit senses the movements of the vehicle, such as acceleration, deceleration, lateral tilt, and it adjusts the water level by choosing and operating the appropriate n water outlet channels (see Figures No.3a and 3c) and k water inlet channels along the lateral sides of the m pool to compensate for the swaying of the water. The 3 water flow and sway controlling unit is capable of transferring large amounts of water quickly and in the required direction from one part of the m pool into another part of it. For example, in the wake of heavy braking the water in m pool flows to the front wall of the m pool, in the direction of travel, at the same time it is forced by inertia to surge upwards. At this point of time the j valves of the n water outlet channels on the frontal wall of m pool open up at the electrical signal of the v central control unit processing the signals from the sensors installed in the vehicle. The water is transferred into one or several t surge tank / tanks, thus decreasing the amount of water congested in the front part of the m pool, and simultaneously, it is forced to flow downwards. At the same time, the previously drained water is injected by the sz high pressure pumps through the k water inlet channels located in the middle section of the bottom plate of the m pool, slowing down the forward movement of the water caused by inertia. Since the control signal comes from the vehicle, there is enough time to manage the delayed reaction of the mass of water in the m pool. By "the signal coming from the vehicle " we mean that the change in the brake pressure triggers the control signal, the v central control unit controls the speed of the sz high pressure pump according to this signal, and accordingly, the amount of the transferred water, and the program controls the extent and time span of the opening and closing of the appropriate n and k channels as well. The time gain results from the time required for the water to begin to gush to the frontal part of the m pool at braking, while the n water outlet channels on the front wall have already started to open up. As a matter of course, the program of the v central control unit also contains a secondary routine that evaluates the signals of the water-level sensors in the m pool, because the amount of the water to be controlled changes due to engine braking effect, changing direction, movement of people within the m pool as well as the action of the 1 pool moving unit and the 2 flood diverting unit. By activating the individually controlled v valves the diameter and the opening time interval of each n water outlet channel can be precisely controlled. According to preliminary calculations, the seats fixed in the space of m pool significantly reduce the swaying motion of the water, functioning, as it were, as a breakwater.

The motor vehicle described by the invention also comprises a v central control unit composed of 5 water level sensors, 9 signallers, a computer and computer programs, which control the coordinated action of the different water level controlling units, namely the 2 flood diverting unit, the 1 pool moving unit and the 3 water flow and swing controlling unit. The computer processes the information coming from the 5 water level sensors and the 9 signallers as well as runs the preset controlling program. The main principle of the complex functions of the control program has two main components. One of the said components is a pre-programmed, constant water-level controlling routine using the pre-programmed data which had been measured at different instances of acceleration, deceleration and changes of direction. The other component is a set of variables derived from the current situation. The sensors installed to evaluate the current situation are capable of modifying, so to speak overwriting the steps of the constant water-level controlling routine within certain limits. These sensors monitor the tilt, the acceleration, the deceleration, the water temperature and the water quality. The different units form a hierarchy, which means that for instance in the first cycle of water controlling the 2 flood diverting unit and the 1 pool moving unit are operating in parallel, and the 3 water flow and sway controlling unit starts working only after the other two units. In case of light deceleration, acceleration or cornering the partial execution of the first cycle is sufficient to control the swaying of water, based on our calculations, the 2 flood diverting unit and the 1 pool moving unit are often enough to fully control the water level of the m pool, it is not always necessary to operate the 3 water flow and sway controlling unit. The mass and movement of the people staying in the m pool, the unpredictable changes of road traffic may of course necessitate operating the 3 water flow and sway controlling unit as well, for example in case of emergency braking. The controlling program is finely scaled, which allows precise controlling. The computer of the central control unit controls the functioning of a 7 Jacuzzi system, a 8 water filtering system and a water heating-cooling system as well.

The combined or partial operation of the different units of the water-level controlling unit of the m pool mounted on the mobile motor vehicle described by the invention provides for the controlling of the water level of m pool, keeping the level stable regardless of the road conditions or any other circumstances.

Furthermore, a possible embodiment of the invention comprises the overall services provided by the motor vehicle described by the invention. A few examples of the services without a claim for completeness are: conducting sightseeing tours, social events, e.g. birthdays, wedding parties, bachelor parties, hen nights etc. For example, a sightseeing tour is similar to the usual services of sightseeing buses except that the tourist, having boarded the bus, change into bathing costumes / trunks, and besides admiring the sights while sitting in a m pool with pleasant water enjoying hydromassage, Jacuzzi or bubble bath, they have the possibility to have meals and/or beverages. The said vehicle may be any vehicle with permission to be used in road traffic. This specially converted vehicle may be primarily a bus, recreational vehicle, semitrailer with attached superstructure, truck, van, or any automobile with removable superstructure or with a car-body that can be converted in a manner to allow a m pool to be installed and contain water. The passengers stay in this m pool and while bathing in the slowly moving vehicle, they enjoy the view and the attractions of the city, and they can listen to tour guides in several languages. The m pool is equipped with facilities for bathing, back massage and different refreshing devices. Thanks to the technical solutions and setting up the background service, the mobile bathing vehicle offers hygienic and professional service for the customers in winter and summer alike. The background service consists of one or more lockable buildings, premises where the mobile vehicle with water bathing facility can be parked and the passengers can get on or off the vehicle, furthermore, in the said building there is a waiting room, changing rooms, shower rooms, toilets and any other rooms required for professional service. In order to provide full-scale service for the customers, it is possible for the passengers to get on or off the mobile vehicle with water bathing facility not only at the premises but also at any point of the city, that is, in the street. The passengers can get on or off anywhere at the scheduled and advertised stops, the design of the mobile vehicle with water bathing facility caters for all the needs of the passengers, such as changing of clothes, storage of clothes, overall hygienic service, for example the vehicle contains changing room, shower, toilet, clothes-storing unit, locker. The technical solutions of the mobile vehicle with water bathing facility allow raising the temperature of the m pool and keeping the temperature at a constant level to such a degree that the people in the water feel comfortable even in cold winter. In summer the water can be kept at a pleasant, refreshing temperature. In winter, the heat produced by the car engine is primarily used for the heating of the m pool, but additional heat input is also ensured by installed technical solutions. The space inside the m pool allows for special plastic seats to be installed, these seats, due to their sufficiently flexible material provide proper protection and pleasant feel to the touch. These seats are constructed in such a manner that they can be easily removed individually, which provides the m pool with extraordinary versatility, that is, free spaces of different size can be created inside the m pool. The injection of air into the water, which is the basic element of a Jacuzzi system, is primarily accomplished by an air compressor powered by the car engine. The regulation of the standard water level, that is, the water level measured when the car is in a stationary position, is performed by means of c spillways, the e water outlet tunnel and the g circulation pump. This ensures that the m pool has a stretched water surface, which means that the spilt water is trapped and then returned into the m pool through the 8 water filtering system.

**The advantages of the invention, its novelty compared to the present state of the art.**

The additional advantage of the application described by the invention is that contrary to the currently used sightseeing buses it allows the tourists to see the sights while travelling in a m pool filled with water of pleasant temperature, and to listen to the tour guide. A beneficial new feature is the fact that the equipment installed in the m pool providing foot massage, back massage and other wellness equipment actively help to meet the tourists' requirements for entertainment and relaxation. On the other hand, the water-level controlling unit of the mobile vehicle for entertainment with bathing pool ensures the water level control of the m pool containing water with people in the water. When the motor vehicle is on the move, the level of the water in the pool remains constant due to the elevating and lowering of the body of m pool by the ke transversal elevating unit and the he longitudinal elevating unit according to the road and traffic conditions and due to the pumping out and pumping in of water at a constantly changing rate and direction depending on the signals of the sensors. Returning the surge water into the m pool is ensured by the w floodspace, the specially shaped f curved wall at the front and the back sides of the m pool and the b water deflecting lamellae. We can state, that the bathing people can not only be transported by this solution in the vehicle moving in road traffic, but their pool-entertainment will be increased by moving the bathing pool in three dimensions relative to the chassis moving of the bathing pool.

**List of items**
- 1: pool moving unit
- 2: flood diverting unit
- 3: water flow and swing controlling unit
- 5: sensors
- 6: water-level controlling system
- 7: jacuzzi system
- 8: water filtering system
- 9: signallers
- 10: pool water level control
- 11: chassis
- b: water deflecting lamellae
- c: spillways
- cs: return channel of flood space
- d: grilled protective casing
- e: water outlet tunnel
- f: curved wall
- g: circulation pump
- gy: bearing
- h: hydraulic cylinder
- he: longitudinal elevating units
- j: valves
- k: water inlet channels
- ke: transversal elevating unit
- I: flexible ducts
- m: pool
- n: water outlet channels
- p: air compressor
- q: water heating-cooling system
- r: protective grille
- s: swinging gate
- sz: high pressure pump
- t: surge tank
- u: longitudinal axis
- v: central control unit
- w: floodspace
- x: stage
- y: bearing housing
- z: cross axis

## Claims

1. Motor road traffic vehicle with bathing pool mounted on the vehicle, filled with water, equipped with a water level controlling system (6) controlling to a constant level the water of this pool in the moving vehicle for pool-entertainment of bathing people transported in the pool filled with water in the traffic moving vehicle, a pool moving unit (1) with a moveable stage (x), and a central control unit (v), where the water level controlling system (6) comprises a flood diverting unit (2) as well as a water flow and swing controlling unit (3), **characterised in that** the pool (m) fixed on the in three dimensions moveable stage (x) of the pool moving unit (1) is mounted on the vehicle, the pool (m) is attached to the chassis (11) of the vehicle through the pool moving unit (1), which comprises at least one transversal elevating unit (ke), at least one longitudinal elevating unit (he), articulated suspension parts and brackets, bearings (gy), bearing housing (y), longitudinal axis (u), cross axis (z), the stage (x) where the transversal elevating units (ke) are joined to the stage (x) and to the chassis (11) of the motor vehicle and the longitudinal elevating units (he) joined to the bearing housing (y) and to the chassis (11) allowing the stage (x) to move in three dimensions relative to the chassis of the vehicle.

2. Motor road traffic vehicle with bathing pool according to claim 1 **characterised in that** the elevating unit (ke) and the longitudinal elevating unit (he) comprises screw jacks, hydraulic or pneumatic cylinders.

3. Motor road traffic vehicle with bathing pool according to any of claims 1-2 **characterised in that** *the* flood diverting unit (2) comprises at least one curved wall (f) of the pool (m), at least one floodspace (w), the same number of swinging gates (s) and grilled protective casings (d) as the floodspaces (w), as well as water deflecting lamellae (b), and return channels of flood spaces (cs), where the curved wall (f) of the pool (m) is of an inwards curving shape forming a semicircle which is connected to the floodspace (w) through a the swinging gate (s), which swinging gate (s) automatically opens exclusively in the direction of the floodspace (w), the return channels of flood spaces (cs) are positioned on the right and left sides of the pool (m), the gates of the floodspace (w) and of the return channels of flood spaces (cs) are covered with grilled protective casing (d).

4. Motor road traffic vehicle with bathing pool according to any of claims 1-3 **characterised in that** the water flow and swing controlling unit (3) comprises water outlet channels (n), water inlet channels (k), high pressure pumps (sz), flexible ducts (I), valves (j) and surge tanks (t), where the water outlet channels (n) are positioned along the bottom one-third of the front, rear or side walls of the pool (m), the water outlet channels (n) and the water inlet channels (k) are covered with protective grilles(r), the water inlet channels (k) are positioned on the bottom plate of the pool (m), the water outlet channels (n) are connected to the surge tanks (t) through the flexible ducts (I) and the valves (j), the water inlet channels (k) are connected to the surge tanks (t) through the high pressure pumps (sz) and the flexible ducts (I).

5. Motor road traffic vehicle with bathing pool according to any of claims 1-4 **characterised in that** the control unit (v) comprises at least one water-level, sensor (5), at least one acceleration, deceleration, tilt signaller (9), a gyroscope, at least one computer, computer programs, relays, electrical wires, where the sensors (5) and the signallers (9) are connected to the in-ports of the computer, where the high pressure pumps (sz), the valves (j), the transversal elevating unit (ke), the longitudinal elevating unit (he), are controlled by the computer.

6. Motor road traffic vehicle with bathing pool according to any of claims 1-5 **characterised in that** the water-level controlling system (6) of the pool (m) comprising the pool moving unit (1), the flood diverting unit (2) and water flow and swing controlling unit (3) is controlled by the central control unit (v) in hierarchical order depending on the strength of a water surge where the water surge fills the flood diverting unit (2), at the same time the pool (m) is tilted by the pool moving unit (1) and then the remaining water surge is diverted by means of the water flow and sway controlling unit (3).

7. Motor road traffic vehicle with bathing pool according to any of claims 1-6 **characterised in that** the pool (m) is equipped with water heating-cooling units for controlling the water temperature of the pool (m).

8. Motor road traffic vehicle with bathing pool according to any of claims 1-7 **characterised in that** the vehicle comprises any of additional equipment enhancing comfort and assuring hygiene amenities:
- the pool (m) is equipped furthermore as a part of the central control unit (v) with a water temperature controlling system comprising water temperature and air temperature sensors connected to the input of the computer and water heaters and water cooling units controlled by the computer.
- water- and air nozzles in the pool (m) to provide back and lower-back massage,
- removable seats in the pool (m),
- changing room, a lavatory, shower room and locker on board of the motor vehicle,
- steps and passageways covered with slip-free material,
- the seats are equipped with seatbelts in the pool (m).

9. Motor road traffic vehicle with bathing pool according to any of claims 1-8 **characterised in that** the pool (m) is made of either transparent or non-transparent material, its top is open, or covered or partly covered by a roof or a sliding sunroof.

10. Motor road traffic vehicle with bathing pool according to any of claims 5-9 **characterised in that** the constant water level of the pool (m), preventing the water swaying caused by the movement of the motor vehicle due to the road and traffic conditions, is kept by tilting of the pool (m) fixed on the stage (x) moved in three dimensions by the transversal elevating units (ke) and the longitudinal elevating units (he) of the pool moving unit (1) controlled by the computer of the pool moving unit (1) based on the signals of the sensors (5) and signallers (9) of the pool moving unit (1), which signals are fed into the central control unit (v) in the moving vehicle.

11. Motor road traffic vehicle with bathing pool according to claim 3 or claims 4-10 when dependent on claim 3 **characterised in that** the water surge triggered by the movements of the motor vehicle is channelled with changed direction by the curved wall (f) through all of parts of the flood diverting unit (2) as the swinging gate (s), the water deflecting lamellae (b), the floodspace (w) and the return channels (cs) on the right and left sides of the floodspace (w) back into the middle part of the pool (m).

12. Motor road traffic vehicle with bathing pool according to claim 4 or claims 5-11 when dependent on claim 4 **characterised in that** the water surge caused by the road and traffic conditions is channelled under a control of signals of the central control unit (v) through all of the parts of the water flow and swing controlling unit (3) as follows the valves (j) opened to a diameter and time interval, the water outlet channels (n), the surge tanks (t), the immediately pumping high pressure pumps (sz) and the water inlet channels (k) back into the pool (m).

13. Motor road traffic vehicle with bathing pool according to claim 8 or claims 9-12 when dependent on claim 8 **characterised in that** the comfort and hygiene amenities also include at least one high pressure water jet foot-and back massage, least one high pressure air injecting Jacuzzi system in the pool (m), the water of the pool (m) is heated or cooled to required temperature by the water temperature controlling system and the motor vehicle is equipped with seats, food and drinks storing units for passengers, the motor road traffic vehicle being adapted such that the passengers including of the people transported in a bathing pool (m) filled with water entertained with the moving bathing pool (m) equipped water-level controlling system (6) are in a sightseeing tour in the vehicle moving in the road traffic.

## Patentansprüche

1. Kraftfahrzeug auf einem mit Wasser gefüllten Fahrzeug montierten Becken, ausgestattet mit einem Wasserstandkontrollsystem (6) zum stufenlosen Einstellen des Wasserstands des sich bewegenden Fahrzeugs in einem sich bewegenden Fahrzeug zum Vergnügen von Personen, die in einem mit Wasser gefüllten Becken befördert werden, eine Beckenbewegungseinheit (1) mit einer beweglichen Bühne (x) und eine zentrale Regelungseinheit (v), in der das Wasserstandkontrollsystem (6) eine Wellenumlenkungseinheit (2) sowie eine Wasserstrom- und Schwenksteuereinheit (3) umfasst, ist **dadurch gekennzeichnet, dass** das Becken (m) an der dreidimensionalen beweglichen Bühne (x) der Beckenbewegungseinheit (1) befestigt ist, die an dem Fahrzeug angebracht ist, das Becken (m) ist an dem Fahrgestell (11) des Fahrzeugs durch die Beckenbewegungseinheit (1) befestigt, die mindestens eine Querhubeinheit (ke), mindestens eine Längshubeinheiten (he) und gelenkige Aufhängungsteile, Konsolen, Lager (gy), Lagergehäuse (y), Längsachse (u), Querachse (z), Bühne (x) umfasst, wobei die Querhubeinheiten (ke) mit der Bühne (x) und mit dem Fahrgestell (11) des Kraftfahrzeugs verbunden sindund die Längshubeinheiten (he) mit dem Lagergehäuse (y) und dem Fahrgestell (11) verbunden sind, so dass sich die Bühne (x) in Bezug auf das Fahrgestell des Fahrzeugs in drei Dimensionen bewegen kann.

2. Straßenkraftfahrzeug mit Becken nach dem Anspruch 1 ist **dadurch gekennzeichnet, dass** die Querhubeinheit (ke) und die Längshubeinheit (he) Hubspindeln, Hydraulik- oder Pneumatikzylinder umfassen.

3. Straßenkraftfahrzeug mit Becken nach einem der Ansprüche 1-2 ist **dadurch gekennzeichnet, dass** die Wellenumlenkungseinheit (2) aus mindestens einer gekrümmten Wand (f) des Beckens (m), und mindestens einem Flutraum (w), der gleichen Anzahl von Schwenktoren (s) und Grillschutzhüllen (d) wie Fluträumen (w) sowie von Wasserumlenklamellen (b) und Rücklaufkanäle von Fluträumen (cs) besteht, in denen die gekrümmte Wand (f) des Beckens (m) eine nach innen gekrümmte Form hat und einen Halbkreis bildet, der mit dem Flutraum (w) über ein Schwenktor (s) verbunden ist, wobei sich das Schwenktor (s) automatisch ausschließlich in Richtung des Flutraums (w) öffnenist und die Rücklaufkanäle von Fluträumen (cs) rechts und links vom Becken (m) positioniert sind, die Tore des Flutraums (w) und der Rücklaufkanäle von Fluträumen (cs) mit Grillschutzhüllen(d) bedeckt sind.

4. Straßenkraftfahrzeug mit Becken nach einem der Ansprüche 1-3 ist **dadurch gekennzeichnet, dass** sich in der Wasserstrom- und Schwenksteuereinheit (3) Wasseraustrittskanäle (n), Wassereintrittskanäle (k), Hochdruckpumpen (sz), flexible Röhre (l), Ventile (j) und Ausgleichsbehälter (t) befinden, wobei die Wasseraustrittskanäle (n) entlang des unteren Drittels der Vorder-, Rück- oder Seitenwände des Beckens (m) angeordnet sind, die Wasseraustrittskanäle (n) und die Wassereintrittskanäle (k) sind mit Schutzgittern (r) abgedeckt, die Wassereintrittskanäle (k) befinden sich auf der Bodenplatte des Beckens (m), die Wasseraustrittskanäle (n) sind über die flexiblen Röhre (l) und die Ventile (j) mit den Ausgleichsbehältern (t) verbunden, die Wassereintrittskanäle (k) sind über die Hochdruckpumpen (sz) und die flexiblen Röhre (l) mit den Ausgleichsbehältern (t) verbunden.

5. Straßenkraftfahrzeug mit Becken nach einem der Ansprüche 1-4 ist **dadurch gekennzeichnet, dass** die zentrale Regelungseinheit (v) mindestens einen Wasserstand, Sensor (5), mindestens einen Beschleunigungs-, Verzögerungs-, Neigungssignalgeber (9), ein Gyroskop, mindestens einen Computer, Computerprogramme, Relais, elektrische Leitungen umfasst, wobei die Sensoren (5) und die Signalgeber (9) mit den Anschlüssen des Computers verbunden sind, an denen die Hochdruckpumpen (sz), die Ventile (j), die Querhubeinheit (ke) und die Längshubeinheit (he) vom Computer gesteuert werden.

6. Straßenkraftfahrzeug mit Becken nach einem der Ansprüche 1-5 ist **dadurch gekennzeichnet, dass** das Wasserstandkontrollsystem (6) des Beckens (m) die Beckenbewegungseinheit (1) umfasst, die Wellenumlenkungseinheit (2) und die Wasserstrom- und Schwenksteuereinheit (3) werden von der zentralen Regelungseinheit (v) in der hierarchischen Reihenfolge abhängig von der Stärke des Wasserschwalles gesteuert, bei dem der Wasserschwall die Wellenumlenkungseinheit (2) füllt, das Becken (m) wird gleichzeitig durch die Beckenbewegungseinheit (1) gekippt, und anschließend wird der verbleibende Wasserschwall mittels der Wasserstrom- und Schwenksteuereinheit (3) umgeleitet.

7. Straßenkraftfahrzeug mit Becken nach einem der Ansprüche 1-6 ist **dadurch gekennzeichnet, dass** das Becken (m) mit Wasserheiz, - und Kühleinheiten zur Regelung der Wassertemperatur des Beckens (m) ausgestattet ist.

8. Straßenkraftfahrzeug mit Becken nach einem der Ansprüche 1-7 ist **dadurch gekennzeichnet, dass** sich im Fahrzeug alle zusätzlichen Ausstattungsmerkmale zur Verbesserung des Komforts und zur Gewährleistung der Hygiene befinden:
- das Becken (m) ist ferner als Teil der zentralen Regelungseinheit (v) mit einem Wassertemperaturregelungssystem ausgestattet, das die Wassertemperatur- und Lufttemperatursensoren umfasst, die an den Eingang des Computers angeschlossen sind, und die Wasserheiz, - und Kühleinheiten, die vom Computer gesteuert sind,
- Wasser- und Luftdüsen im Becken (m) zur Rücken- und unteren Rückenmassage,
- abnehmbare Sitze im Becken (m),
- Umkleideraum, Toilette, Duschraum und Schließfach eines Kraftfahrzeugs,
- mit rutschhemmendem Material bedeckte Treppen und Durchgänge,
- die Sitze sind mit Sicherheitsgurten im Becken (m) ausgestattet.

9. Straßenkraftfahrzeug mit Becken nach einem der Ansprüche 1 bis 8 ist **dadurch gekennzeichnet, dass** das Becken (m) entweder aus transparentem oder nicht transparentem Material besteht, dessen Oberseite offen oder teilweise von einem Dach oder einem Schiebedach bedeckt ist.

10. Straßenkraftfahrzeug mit Becken nach einem der Ansprüche 5 bis 9 ist **dadurch gekennzeichnet, dass** der konstante Wasserstand des Beckens (m), der verhindert, dass das Wasser aufgrund der Straßen- und Verkehrsverhältnisse durch die Bewegung des Kraftfahrzeugs driftet, wird durch Kippen des auf der Bühne (x) befestigten Beckens (m) gehalten, das sich durch die Querhubeinheiten (ke) und die Längshubeinheiten (he) der Beckenbewegungseinheit (1) in drei Dimensionen bewegt, dievom Computer gesteuerte Beckenbewegungseinheit (1) basiert auf den Signalen der Sensoren (5) und der Signalgeber (9) der Beckenbewegungseinheit (1), welche Signale in die zentrale Regelungseinheit (v) in dem sich bewegenden Fahrzeug eingespeist werden.

11. Straßenkraftfahrzeug mit Becken nach Anspruch 3 oder den Ansprüchen 4 bis 10, wenn es von Anspruch 3 abhängig ist, ist **dadurch gekennzeichnet, dass** der Wasserschwall durch die Bewegungen des Kraftfahrzeugs mit der gekrümmten Wand (f), durch alle Teile der Wellenumlenkungseinheit (2) als Schwenktor (s), Wasserumlenklamellen (b), Flutraum (w) und Rücklaufkanäle von Fluträumen (cs) rechts und links vom Flutraum (w) zurück in den mittleren Teil des Beckens (m) ausgelöst werden.

12. Straßenkraftfahrzeug mit Becken nach Anspruch 4 oder den Ansprüchen 5-11, wenn es von Anspruch 4 abhängig ist, ist **dadurch gekennzeichnet, dass** der durch die Straßen- und Verkehrsverhältnisse verursachte Wasserschwall unter der Steuerung der zentralen Regelungseinheit (v), durch alle Teile der Wasserstrom- und Schwenksteuereinheit (3) geleitet wird, wie folgt die Ventile (j), die bis zum Durchmesser und Zeitintervall geöffnet sind, die Wasseraustrittskanäle (n), die Ausgleichsbehälter (t), die sofort pumpenden Hochdruckpumpen (sz) und die Wassereintrittskanäle (k) zurück ins Becken (m) geleitet werden.

13. Straßenkraftfahrzeug mit Becken nach Anspruch 8 oder den Ansprüchen 9-12, wenn es von Anspruch 8 abhängig ist, ist **dadurch gekennzeichnet, dass** die Komfort- und Hygienemöglichkeiten auch mindestens ein Hochdruck-Luftinjektions-Whirlpoolsystem im Becken (m) umfassen, wobei das Wasser im Becken (m) auf die erforderliche Temperatur erwärmt oder abgekühlt wird und das Kraftfahrzeug mit Sitzen, Speisen- und Getränkelagereinheiten für Fahrgäste ausgestattet ist, das Kraftfahrzeug ist so beschaffen, dass die Fahrgäste in einem mit Wasser gefüllten Becken (m) befördert werden, mit dem beweglichen Becken (m), das mit einem Wasserstandkontrollsystem (6) ausgestattet ist, werden die Fahrzeuge auf einer Besichtigungstour im Straßenverkehr bewegt.

## Revendications

1. Véhicule routier automobile avec bassin de baignade monté sur le véhicule, rempli d'eau, équipé d'un système de régulation du niveau d'eau (6) assurant le niveau constant de la piscine dans le véhicule en mouvement aux fins de divertir en piscine les gens transportés dans la piscine remplie d'eau dans le véhicule en plein trafic, une unité mobile de piscine (1) avec une platform flexible (x), et une unité de commande centrale (v) où le système de régulation du niveau d'eau (6) comprend une unité de prévention de déversements (2) ainsi qu'une unité de commande du débit et de l'oscillation de l'eau (3) **caractérisé en ce que** la piscine (m) fixée sur la plateforme (x) amovible en trois dimensions de l'appareil de levage de la piscine (1) est montée sur le véhicule, la piscine (m) est attachée à la structure de base (11) du véhicule à l'aide de l'appareil de levage de la piscine (1) lequel comprend au moins une unité de levage transversal (ke), au moins une unité élévatrice longitudinale (he), des pièces de suspension articulées et braquets, paliers (gy), logement de palier (y), axe longitudinal (u), axe de croisement (z), la plateforme (x) où les unités de levage transversal (ke) sont jointes à la plateforme (x) et à la structure de base (11) du véhicule motorisé et l'unité élévatrice longitudinale (he) est jointe au logement de palier (y) et à la structure de base (11) permettant à la plateforme (x) de se déplacer en trois dimensions par rapport à la structure de base du véhicule.

2. Véhicule routier automobile avec bassin de baignade monté sur le véhicule conformément à la revendication 1 **caractérisé en ce que** l'unité de levage transversal (ke) et l'unité élévatrice longitudinale (he) comprennent des vérins à vis, cylindres hydrauliques et pneumatiques.

3. Véhicule routier automobile avec bassin de baignade monté sur le véhicule conformément à l'une quelconque des revendications 1-2 **caractérisé en ce que** l'unité de prévention des déversements (2) comprend au moins une paroi incurvée (f) de la piscine (m), au moins un espace d'envahissement (w), le nombre de portes pivotantes (s) et de caissons de protection grillés (d) identique à celui des espaces d'envahissement (w) ainsi que des lamelles de guidage d'eau (b) et des canaux de retour des espaces d'inondation (cs) où la paroi incurvée (f) de la piscine (m) a une forme incurvée à l'intérieur constituant un demi-cercle laquelle est connectée à l'espace d'envahissement (w) par une porte pivotante (s), laquelle porte pivotante (s) s'ouvre automatiquement exclusivement vers l'espace d'envahissement (w), les canaux de retour des espaces d'inondation (cs) sont disposés sur les côtés droit et gauche de la piscine (m), les portes des espaces d'envahissement (w) et des canaux de retour des espaces d'inondation (cs) sont couverts des caissons de protection grillés (d).

4. Véhicule routier automobile avec bassin de baignade monté sur le véhicule conformément à l'une quelconque des revendications 1-3 **caractérisé en ce que** l'unité de commande du débit et de l'oscillation de l'eau (3) comprend des canaux de sortie d'eau (n), des canaux d'entrée d'eau (k), des pompes à haute pression (sz), des conduites flexibles (l), des valves (j) et des réservoirs d'équilibrage (t) où les canaux de sortie d'eau (n) sont disposés tout au long du tiers inférieur des parois avant, arrière ou latérales de la piscine (m), les canaux de sortie d'eau (n) et les canaux d'entrée d'eau (k) sont couverts de grilles de protection (r), les canaux d'entrée d'eau (k) sont disposés sur la plaque inférieure de la piscine (m), les canaux de sortie d'eau (n) sont connectés au réservoir d'équilibrage (t) par les conduites flexibles (l) et les valves (j), les canaux d'entrée d'eau (k) sont connectés au réservoir d'équilibrage (t) par les pompes à haute pression (sz) et des conduites flexibles (l).

5. Véhicule routier automobile avec bassin de baignade monté sur le véhicule, conformément à l'une quelconque des revendications 1-4 **caractérisé en ce que** l'unité de commande centrale (v) comprend au moins un capteur de niveau d'eau (5), au moins un aiguilleur (9) d'accélération, de ralentissement et d'inclinaison, un gyroscope, au moins un ordinateur, des logiciels, relais, fils électriques où les capteurs de niveau d'eau (5) et les aiguilleurs (9) sont connectés aux ports intérieurs de l'ordinateur, où les pompes à haute pression (sz), les valves (j), l'unité de levage transversal (ke), l'unité élévatrice longitudinale (he) sont commandées par l'ordinateur.

6. Véhicule routier automobile avec bassin de baignade monté sur le véhicule conformément à l'une quelconque des revendications 1-5 **caractérisé en ce que** le système de régulation du niveau d'eau (6) de la piscine (m) comprenant l'appareil de levage de la piscine (1), l'unité de prévention de déversement (2) et l'unité de commande du débit et de l'oscillation de l'eau (3) sont contrôlés par l'unité de commande centrale (v) dans un ordre hiérarchique en fonction de l'intensité des flots où les flots remplissent l'unité de prévention de déversement (2), en même temps la piscine (m) est maintenue en équilibre par l'appareil de levage de la piscine (1) et puis le reste de l'eau est détourné par l'unité de commande du débit et de l'oscillation de l'eau (3).

7. Véhicule routier automobile avec bassin de baignade conformément à l'une quelconque des revendications 1-6 **caractérisé en ce que** la piscine (m) est équipée d'une unité de chauffe et de refroidissement d'eau ayant comme fonction de contrôler la température de l'eau dans la piscine (m).

8. Véhicule routier automobile avec bassin de baignade conformément à l'une quelconque des revendications 1-7 **caractérisé en ce que** le véhicule comprend l'un quelconque des équipements additionnels ayant pour fonction d'améliorer le confort et d'assurer des conditions d'hygiène adéquates:
- la piscine (m) est équipée en outre, d'un système de contrôle de température de l'eau, faisant partie de l'unité de commande centrale (v), comprenant des détecteurs de température d'eau et de température d'air connectés à l'entrée de l'ordinateur et des unités de chauffage et de refroidissement commandées par l'ordinateur
- buses d'eau et d'air dans la piscine (m) pour assurer le massage du dos et du bas du dos,
- sièges amovibles dans la piscine (m),
- vestiaire, toilettes, salle de douche, armoire-vestiaire à bord du véhicule à moteur
- échelons et passages couverts d'un matériel antidérapant
- les sièges sont équipés des ceintures de sécurité dans la piscine (m)

9. Véhicule routier automobile avec bassin de baignade conformément à l'une quelconque des revendications 1-8 **caractérisé en ce que** la piscine (m) est construite d'un matériau soit transparent, soit non transparent, son dessus est soit ouvert, soit couvert, soit partiellement couvert par un couvercle ou par un toit ouvrant coulissant.

10. Véhicule routier automobile avec bassin de baignade conformément à l'une quelconque des revendications 5-9 **caractérisé en ce que** le niveau constant de l'eau à la piscine (m), tout en empêchant les oscillations de l'eau provoquées par le mouvement du véhicule à moteur dû aux conditions routières et de trafic, est maintenu par l'inclinaison de la piscine (m) fixée sur la plateforme (x) déplacée en trois sens par l'unité de levage transversal (ke) et l'unité élévatrice longitudinale (he) de l'appareil de levage de la piscine (1) commandé par l'ordinateur de l'appareil de levage de la piscine (1) alimentés par les signaux émis des capteurs de niveau d'eau (5) et des aiguilleurs (9) de l'appareil de levage de la piscine (1), lesquels signaux alimentent l'unité de commande centrale (v) dans le véhicule à moteur en mouvement.

11. Véhicule routier automobile avec bassin de baignade selon la revendication 3 ou les revendications 4 à 10 lorsqu'elles dépendent de la revendication 3 **caractérisé en ce que** le flot provoqué par les mouvements du véhicule à moteur est canalisé à géométrie variable par la paroi incurvée (f) par toutes les parties de l'unité de prévention de déversement (2) ainsi que par la porte pivotante (s), les lamelles de guidage d'eau (b), l'espace d'envahissement (w) et les canaux de retour des espaces d'inondation (cs) aux côtés droit et gauche de l'espace d'envahissement (w), faisant marche arrière vers la partie médiane de la piscine (m).

12. Véhicule routier automobile avec bassin de baignade selon la revendication 4 ou les revendications 5 à 11 lorsqu'elles dépendent de la revendication 4 **caractérisé en ce que** le flot provoqué par les conditions routières et de trafic est canalisé sous le contrôle des signaux de l'unité de commande centrale (v) par toutes les parties de l'unité de commande du débit et de l'oscillation de l'eau (3) suivant les valves (j) ouvertes à un diamètre ou intervalles de temps, les canaux de sortie d'eau (n), le réservoir d'équilibrage (t), les pompes à haute pression (sz) immédiatement en pompage et les canaux d'entrée d'eau (k) faisant marche arrière vers la piscine (m).

13. Véhicule routier automobile avec bassin de baignade selon la revendication 8 ou les revendications 9 à 12 lorsqu'elles dépendent de la revendication 8 **caractérisé en ce que** les équipements ayant comme fonction d'assurer le confort et les conditions d'hygiène adéquates comprennent au moins un appareil de massage du dos et des pieds à jet d'eau haute pression, au moins un appareil de système de jacuzzi, à injection d'air à haute pression dans la piscine (m), l'eau de la piscine (m) est chauffée ou refroidie à la température requise par le système de contrôle de la température d'eau, et le véhicule à moteur est équipé de sièges, unités de stockage d'aliments et de boisson, transformé de telle sorte que les passagers, ceux transportés dans la piscine (m) remplie d'eau, bénéficiant des services de divertissement dus à la piscine (m) en mouvement équipée d'un système de régulation du niveau d'eau (6) y compris, puissent faire une visite touristique dans un véhicule tout en participant a la circulation routière.
